# EUROPÄISCHE PATENTSCHRIFT

(11) **EP 2 854 495 B1**
(45) Veröffentlichungstag und Bekanntmachung des Hinweises auf die Patenterteilung: **27.04.2016**
(21) Anmeldenummer: 13725647.5
(22) Anmeldetag: 27.05.2013
(51) Int. Cl.: A01B 49/02, A01B 63/22, F15B 15/24

(54) **LANDWIRTSCHAFTLICHES BODENBEARBEITUNGSGERAET**
AGRICULTURAL SOIL CULTIVATION DEVICE
MACHINE AGRICOLE DE TRAVAIL DU SOL

(30) Priorität: 31.05.2012 DE 102012104699
(43) Veröffentlichungstag der Anmeldung: 08.04.2015
(73) Patentinhaber: Amazonen-Werke H. Dreyer GmbH & Co. KG, 49205 Hasbergen (DE)
(72) Erfinder: SCHERF, Silvio, 39444 Hecklingen OT Cochstedt (DE)
(86) Internationale Anmeldenummer: PCT/EP2013/060819
(87) Internationale Veröffentlichungsnummer: WO 2013/178562

(56) Entgegenhaltungen:
- EP-A1- 1 859 670
- EP-A2- 1 653 088
- WO-A1-2010/041927
- DE-U1-202011 107 536
- US-A- 4 825 958

## Beschreibung

Die Erfindung betrifft ein landwirtschaftliches Bodenbearbeitungsgerät gemäß des Oberbegriffes des Patentanspruches 1.

Ein derartiges landwirtschaftliches Bodenbearbeitungsgerät ist aus der DE 20 2011 107 536 U1 bekannt. Derartige Bodenbearbeitungsgeräte sind als Grubber ausgebildet und weisen für den Transport auf der Straße ein integriertes Transportfahrwerk auf. Dieses Fahrwerk ist mittels doppeltwirkender Hydraulikzylinder für den Transport des Gerätes auf der Straße abzusenken, so dass das Bodenbearbeitungsgerät angehoben wird, und für die Bearbeitung des Bodens wird das Transportfahrwerk gegenüber dem Rahmen angehoben, so dass die Bodenbearbeitungswerkzeuge in den Boden eindringen können. Während der Bodenbearbeitung stützt sich dann das Bodenbearbeitungsgerät auf die vorderen Stützräder und die hinter den Bodenbearbeitungswerkzeugen angeordnete Bodenwalze ab. Es ist auch möglich, dass die Bodenwalze, welche wahlweise hinter den Bodenbearbeitungswerkzeugen anzuordnen ist, für bestimmte Bodenbearbeitungsvorgänge von dem Gerät abgenommen wird, wenn keine Rückverfestigung des Bodens durch eine Bodenwalze erfolgen soll. In diesem Falle dienen dann die Laufräder des Transportfahrwerkes als Abstützung des Gerätes gegenüber dem Boden. Die Einstellung des Gerätes gegenüber dem Boden, wenn die Bodenwalzen von dem Gerät abgenommen ist, ist dann relativ schwierig und nur in unzureichender Weise vorzunehmen.

Der Erfindung liegt die Aufgabe zu Grunde, eine vereinfachte Arbeitstiefeneinstellung des Gerätes sowohl mit an dem Gerät angeordneter Bodenwalze oder bei dem Einsatzfall, wenn die Bodenwalze von dem Gerät abgenommen ist, zu erreichen.

Diese Aufgabe wird erfindungsgemäß durch ein Bodenbearbeitungsgerät mit den Merkmalen des Anspruchs 1 gelöst.

Infolge dieser Maßnahmen kann das Hydrauliksystem für die Umstellung des Gerätes von Transport- auf Arbeitsstellung und für die Einstellung der Arbeitstiefe der Bodenbearbeitungswerkzeuge unabhängig von der Ausstattung des Gerätes mit oder ohne Bodenwalzen ohne jede Veränderung genutzt werden. Hierzu ist es lediglich erforderlich, wenn die Bodenwalze von dem Gerät abgenommen ist, dass bei der dem Transportfahrwerk zugeordneten Zylinderstange, welche dem zweiten Zylinderraum zugeordnet ist, die Distanzscheiben zur Einstellung des Hubweges dieser Zylinderstange verwendet werden. Es erfolgt also immer die Einstellung der Arbeitstiefe der Bodenbearbeitungswerkzeuge über den gleichen unveränderten Hydraulikkreislauf, egal ob das Gerät mit oder ohne Bodenwalze zum Einsatz kommt. Wenn das Gerät ohne Bodenwalze zum Einsatz kommt, übernehmen die Laufräder des Transportfahrwerkes die Tiefenführung der Bodenbearbeitungswerkzeuge. Die Tiefeneinstellung erfolgt immer in gleicher Weise über das unveränderte Hydrauliksystem.

Um in einfacher Weise die Tiefeneinstellung des Gerätes zur Einstellung der Eingriffstiefe der Bodenbearbeitungswerkzeuge in den Boden mit der gleichen Hydraulikschaltung sowohl bei der Tiefenführung über die Bodenwalzen als auch über die Laufräder des Fahrwerkes bei abgenommener Bodenwalze vornehmen zu können, ist vorgesehen, dass die Hydraulikanschlüsse des ersten Zylinderraumes des ersten Hydraulikzylinders mit Hydraulikanschlüssen der zweiten und dritten Hydraulikzylinder in einem gemeinsamen Hydraulikkreissystem zur Einstellung der Arbeitstiefe der Bodenbearbeitungswerkzeuge verbunden sind, dass die Hydraulikanschlüsse des zweiten Zylinderraumes des ersten Hydraulikzylinders mit einem weiteren Hydraulikkreissystem zum Ausheben und Absenken der Laufräder des Transportfahrwerkes gegenüber dem Rahmen verbunden sind. Somit lässt sich die Tiefenführung immer in gleicher Weise bei beiden Einsatzfällen - mit oder ohne Walze - realisieren.

Eine besonders einfache Ausgestaltung des Hydraulikzylinders für die Verstellung des Fahrwerkes sowohl für den Transport wie auch für die Tiefenführung lässt sich dadurch erreichen, dass der erste Hydraulikzylinder aus zwei in deren Bodenbereich miteinander verschweißten doppeltwirkenden Hydraulikzylinders besteht.

Um in einfacher Weise das Gerät sowohl mit wie auch ohne Bodenwalze einsetzen zu können, ist vorgesehen, dass die Bodenwalze abnehmbar am Rahmen angeordnet ist, dass nach Abnahme der Bodenwalze vom Rahmen die Arbeitstiefe der Bodenbearbeitungswerkzeuge über die dem Transportfahrwerk zugeordneten ersten Hydraulikzylinder in Verbindung mit den Distanzscheiben einstellbar ist.

Um in einfacher Weise zu erreichen, dass sich das Bodenbearbeitungsgerät während der Bodenbearbeitung nicht in unzulässiger Weise aufschaukelt und oder aufschwingt, ist vorgesehen, dass die im vorderen Bereich des Rahmens angeordneten Stutzräder als Dämpfungselemente und/oder Schwingungstilger gegen das Aufschaukeln des Bodenbearbeitungsgerätes wirkend ausgebildet sind.

Weitere Einzelheiten der Erfindung sind der Beispielsbeschreibung zu entnehmen. Die Zeichnungen zeigen
- Fig.1: das als Grubber ausgebildete landwirtschaftliche Bodenbearbeitungsgerät mit vorderen Stützrädern, Transportfahrwerk und nachgeordneter Bodenwalze in perspektivischer Darstellung,
- Fig.2: das als Grubber ausgebildete landwirtschaftliche Bodenbearbeitungsgerät mit vorderen Stützrädern, Transportfahrwerk und abgenommener Bodenwalze in perspektivischer Darstellung,
- Fig.3: das als Grubber ausgebildete landwirtschaftliche Bodenbearbeitungsgerät mit vorderen Stützrädern und Transportfahrwerk gemäß Fig.2 in Seitenansicht,
- Fig.4: die Anordnung der ersten Hydraulikzylinder, welche dem Fahrwerk zugeordnet sind, im vergrößerten Maßstab und in perspektivischer Darstellung,
- Fig.5: einen dem Fahrwerk zugeordneten Hydraulikzylinder gemäß Fig.4 in perspektivischer Darstellung,
- Fig. 6: den Hydraulikzylinder gemäß Fig,5 im Schnitt VI-VI und
- Fig.7: den Hydraulikschaltplan für die Hydraulikzylinder des Fahrwerkes, der Stützräder und den Bodenwalzen.

Das landwirtschaftliche Bodenbearbeitungsgerät ist als gezogener Grubber ausgebildet. Der Grubber weist einen Rahmen 1 auf, an dem in mehreren Querreihen hintereinander und auf Lücke versetzt zueinander die Bodenbearbeitungswerkzeuge 2 zur Bearbeitung und Lockerung des Bodens angeordnet sind. Auf der Vorderseite 3 des Rahmens 1 ist die Zugdeichsel 4 zur Ankoppelung des Gerätes an einen nicht dargestellten Ackerschlepper angeordnet. Jeweils im vorderen äußeren Bereich des Rahmens 1 ist vor den Bodenbearbeitungswerkzeugen 2 ein Stützrad 5 am Rahmen 1 in höhenverstellbarer Weise angeordnet. Im hinteren mittleren Bereich des Gerätes ist an dem Rahmen 1 ein Laufrad 6 aufweisendes Transportfahrwerk 7 angeordnet, welches gegenüber dem Rahmen 1 und den Bodenbearbeitungswerkzeugen 2 in der Höhe verstellbar angeordnet ist.

Hinter den den Boden lockernden Werkzeugen 2 ist an dem Rahmen 1 ein nach hinten ragendes Gestänge 8 angelenkt, an dessen Enden in lösbarer Weise eine aus zwei Teilen bestehende Bodenwalze 9 über deren Tragrahmen 10 mittels Befestigungsmitteln 11 befestigt ist. Über das Gestänge 8 ist die Bodenwalze 9 gegenüber dem Rahmen 1 und den daran angeordneten Bodenbearbeitungswerkzeugen 2 in der Höhe verstellbar. Zwischen den Bodenbearbeitungswerkzeugen 2 und der Bodenwalze 9 sind an dem Gestänge 8 als Scheiben ausgebildete Bodennivellierungswerkzeuge 12 angeordnet.

Die Laufräder 6 des Transportfahrwerkes 7 sind über ein Hubgestänge 13 anhebbar und absenkbar an dem Rahmen 1 angelenkt. Zwischen dem Rahmen 1 des Gerätes und den Hubgestänge 13 sind zwei erste doppeltwirkende Hydraulikzylinder 14 angeordnet. Mittels dieser Hydraulikzylinder 14 kann das Hubgestänge 13, und somit die Laufräder 6 des Fahrwerkes 7 angehoben und abgesenkt werden.

Zwischen dem hinteren Ende des Rahmens 1 und dem jeweiligen Gestänge 8 ist jeweils ein zweiter doppeltwirkender Hydraulikzylinder 15 zur Höhenverstellung der aus zwei Teilen bestehenden Bodenwalze 9 gegenüber dem Rahmen 1 und den daran angeordneten Bodenbearbeitungswerkzeugen 2 angeordnet.

Die beiden Stützräder 5 im vorderen Bereich des Gerätes 1 sind mittels Hubarmen 16 an dem Rahmen 1 des Gerätes in höhenverstellbarer Weise angelenkt. Zwischen den Hubarmen 16 der Stützräder 5 und in dem Rahmen 1 des Gerätes sind jeweils dritte doppeltwirkende Hydraulikzylinder 17 zur Höhenverstellung der Stützräder 5 angeordnet.

Zwischen dem vorderen Ende 3 des Rahmens 1 und der Deichsel 4 ist ein weiterer doppeltwirkender Hydraulikzylinder 18 angeordnet, mittels welchem die Deichsel in der Höhe gegenüber dem Rahmen 1 verschwenkt werden kann.

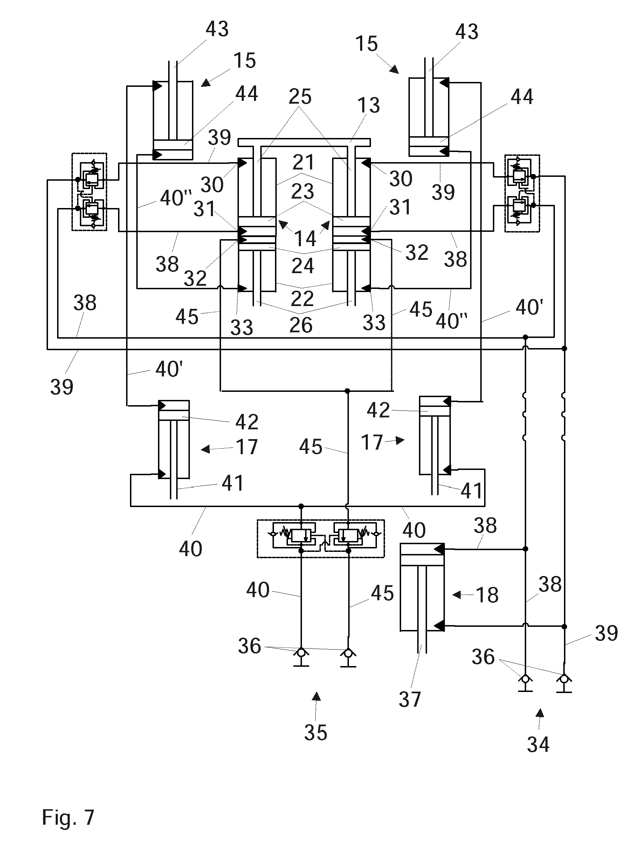

Der Rahmen 1 besteht aus dem Zentralrahmen 1, an dem die beiden Seitenrahmen 1", die Deichsel 4 und die Laufräder 6 des Fahrwerkes 7 über das Hubgestänge 13 jeweils mittels Gelenken in verschwenkbarer Weise angelenkt sind. Die Hubarme 16 der Stützräder 5 und die Gestänge 8 für die Bodenwalzen 9 sind an den Seitenrahmen 1" des Rahmens 1 angelenkt. Um die Seitenrahmen 1" aus der dargestellten Arbeitsstellung in eine nicht dargestellte Transportstellung in einfacher Weise zusammenfalten zu können, sind zwischen den Seitenrahmen 1" und dem Zentralrahmen 1' die doppeltwirkenden Hydraulikzylinder 19 angeordnet. Diese Hydraulikzylinder 19 sind nicht in dem Hydraulikplan gemäß Fig. 7 enthalten.

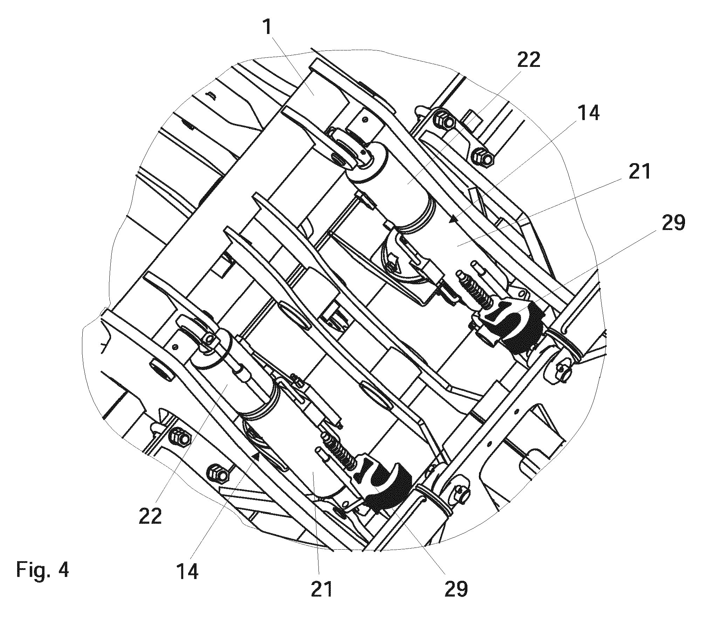

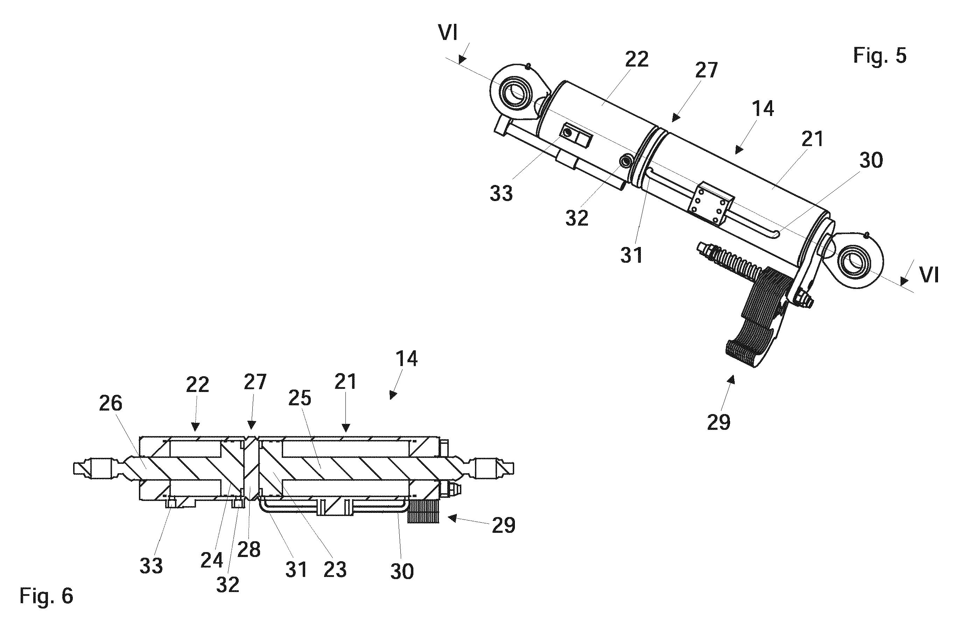

Die Fig. 4 bis 6 zeigen die Anordnung und Ausgestaltung der ersten Hydraulikzylinder 15, die dem Transportfahrwerk 7 zugeordnet sind. Diese ersten Hydraulikzylinder 15 bestehen aus zwei miteinander verbundenen Zylinderräumen 20 und 21, denen jeweils ein Kolben 23 und 24 mit Kolbenstange 25 und 26 zugeordnet ist, wie den Zeichnungen zu entnehmen ist. Im Ausführungsbeispiel sind zwei doppeltwirkende Hydraulikzylinder mit jeweils einem Zylinderraum 20 und 21 in deren Bodenbereich miteinander verschweißt. Somit sind die Zylinderräume 21 und 22 durch eine Trennwand 28 voneinander getrennt. Der einen Kolbenstange 25 des ersten Hydraulikzylinders 14 sind einschwenkbare Distanzscheiben 29 zur Einstellung bzw. Begrenzung des Hubweges der Kolbenstange 25 beim Einziehen der Kolbenstange 25 in den Hydraulikzylinder 21 zugeordnet. Die Distanzscheiben 29 zur Begrenzung des Hubweges des ersten Hydraulikzylinders 14 kommen nur zum Einsatz, wenn die Bodenwalzen 9 von dem Gerät abgenommen sind. Wenn die Bodenwalzen 9 an dem Gerät angeordnet sind und die Arbeitstiefe der Bodenbearbeitungswerkzeuge 2 bestimmen, sind die Distanzscheiben 29 in die in Fig. 5 dargestellte Position geschwenkt, so dass sie den Hubweg der Kolbenstange 25 nicht begrenzen können.

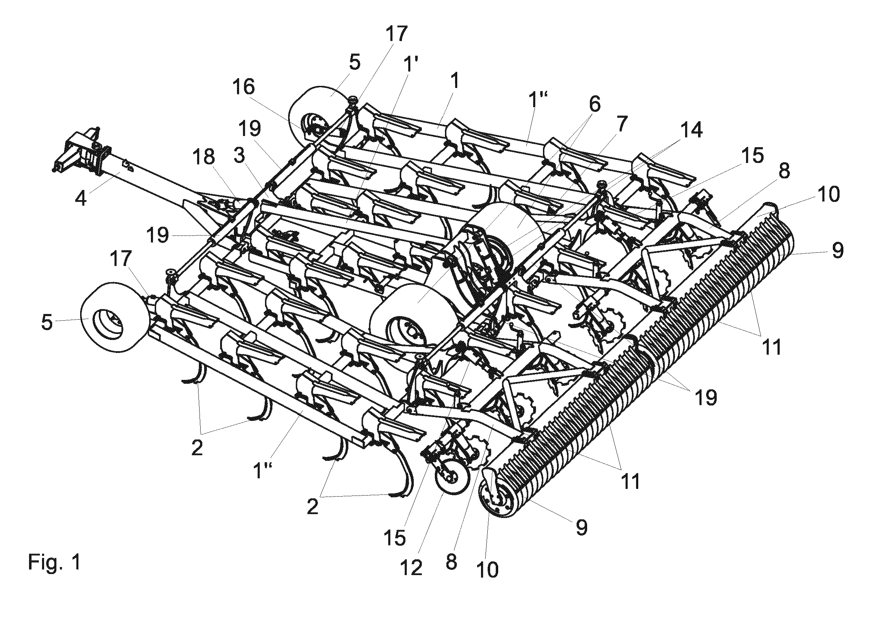

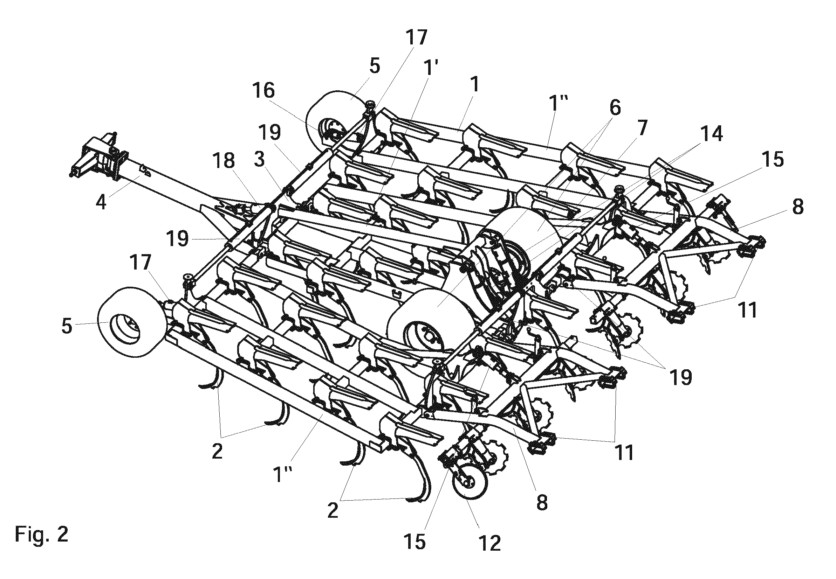

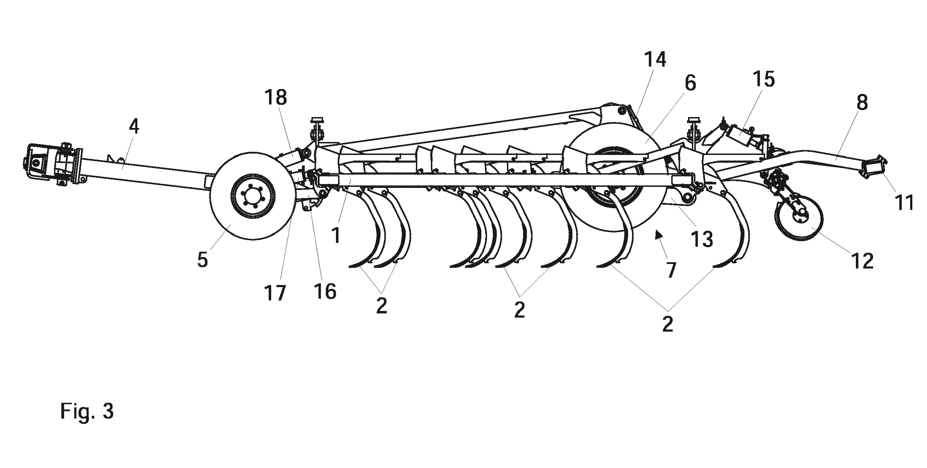

Das Bodenbearbeitungsgerät ist entsprechend der Darstellung in Fig. 1 mit Bodenwalze 9 und entsprechend der Darstellung in Fig. 2 und 3 ohne Bodenwalze 9 einzusetzen.

Wenn das Bodenbearbeitungsgerät entsprechend Fig. 1 mit Bodenwalze 9 eingesetzt wird, erfolgt die Einstellung der Arbeitstiefe der Bodenbearbeitungswerkzeuge 2 über die vorderen Stützräder 5 und der Bodenwalze 9, wobei die Laufräder 6 des Transportfahrwerkes 7 während des Arbeitseinsatzes vom Boden abgehoben sind.

Wie bereits erwähnt, ist der jeweilige Tragrahmen 10 der Bodenwalze 9 mittels lösbarer Befestigungsmittel 11 abnehmbar an dem jeweiligen Gestänge 8 angeordnet, so dass es in einfacher Weise möglich ist das Bodenbearbeitungsgerät ohne Bodenwalzen 9 entsprechend Fig. 2 und 3 zur Bodenbearbeitung einzusetzen.

Die Einstellung der Arbeitstiefe sowohl für den Einsatz des Bodenbearbeitungsgerätes mit Bodenwalze 9 entsprechend Fig. 1 wie auch ohne Bodenwalze 9 entsprechend Fig. 2 und 3 erfolgt wie nachfolgend anhand des Hydraulikplanes gemäß Fig. 7 beschrieben ist.

Der erste Hydraulikzylinder 14 weist einen ersten 22 und einen zweiten Zylinderraum 21 auf, indem jeweils eine mit einem Kolben 23, 24 verbundene Kolbenstange 25, 26 angeordnet ist. Beiden Zylinderräumen 21, 22 des ersten Hydraulikzylinders 14 sind jeweils zwei Hydraulikanschlüsse 29, 30, 31, 32 zugeordnet, so dass hierüber die Zylinderstangen 25, 26 des ersten Hydraulikzylinders 14 in doppeltwirkender Weise ansteuerbar sind. Der in dem zweiten Zylinderraum 21 des ersten Hydraulikzylinders 14 angeordneten Zylinderstange 25 sind die Distanzscheiben 29 zur Einstellung des Hubweges dieser Zylinderstange 25 zugeordnet. Die Hydraulikanschlüsse 33 des ersten Zylinderraumes 22 des ersten Hydraulikzylinders 14 sind über die Leitungen 40" mit Hydraulikanschlüssen der zweiten 15 und dritten Hydraulikzylinder 17 in einem gemeinsamen
Hydraulikkreissystem 35 zur Einstellung der Arbeitstiefe der Bodenbearbeitungswerkzeuge 2 verbunden. Die Hydraulikanschlüsse der zweiten Zylinderräume 21 des ersten Hydraulikzylinders 14 sind mit einem weiteren Hydraulikkreissystem 34 zum Ausheben und Absenken der Laufräder 6 des Transportfahrwerkes 7 gegenüber dem Rahmen 1 verbunden, wie Fig. 7 zeigt.

Die ersten 14, zweiten 15 und dritten Hydraulikzylinder 17 sind über Steckkupplungen 36 mit der Hydraulikanlage des das Gerät ziehenden Schleppers verbunden und verbunden und in den zwei verschiedenen Hydraulikkreisläufen 34 und 35 angeordnet.

Zum Ausheben der Bodenbearbeitungswerkzeuge 2 aus dem Boden und zum Überführen in die Transportposition wird das Gerät durch absenken der Laufräder 6 des Transportfahrwerkes 7 angehoben. Hierzu muss die den zweiten Zylinderräumen 21 zugeordnete Kolbenstange 25 des ersten Hydraulikzylinders 14 sowie die Kolbenstange 37 des der Deichsel zugeordneten weiteren Hydraulikzylinders 18 ausgefahren werden.

Hierzu wird die Hydraulikleitung 38 des Hydraulikkreissystems 34, welche mit dem bodenseitigen Bereich des zweiten Zylinderraumes 21 des ersten Hydraulikzylinders 14 verbunden ist, mit Druck beaufschlagt, so dass die zweite Kolbenstange 25 jeweils des ersten Hydraulikzylinders 14 ausfährt. Durch das Ausfahren der Kolbenstangen 25 verdrängt der Kolben 23 Hydraulikflüssigkeit über die an der Kolbenstangenseite angeschlossene Hydraulikleitung 39 des Hydraulikkreissystems 34 in das Hydrauliksystem 34 zurück. Durch das Absenken der Laufräder 6 gegenüber dem Rahmen 1 werden die Bodenbearbeitungswerkzeuge 2 aus dem Boden gehoben und in eine Transportstellung gebracht. Wenn die Hydraulikleitung 39, welche mit dem kolbenstangenseitigen Bereich des ersten Zylinderraumes 21 des ersten Hydraulikzylinders 14 mit Druck beaufschlagt wird, wird die Kolbenstange 25 eingezogen, und somit die Laufräder 6 des Transportfahrwerkes 9 angehoben und das Gerät die in die Arbeitsstellung abgesenkt.

Zur Einstellung der Arbeitstiefe, d. h. der Eingriffstiefe der Bodenbearbeitungswerkzeugen 2 in den Boden dient das andere Hydraulikkreissystem 35:
Zur Vergrößerung der Arbeitstiefe der Bodenbearbeitungswerkzeuge 2 wird die Hydraulikleitung 40, welche mit dem kolbenseitigen Zylinderraum des dritten Hydraulikzylinders 17 verbunden ist, mit Druck beaufschlagt. Hierdurch werden die Vorderräder 5 gegenüber dem Rahmen 1 und den Bodenbearbeitungswerkzeugen 2 durch das Einfahren der Kolbenstange 41 angehoben, so dass der Rahmen 1 und die Bodenbearbeitungswerkzeuge 2 gegenüber den Vorderrädern 5 und dem Boden abgesenkt werden. Durch das Einfahren der Kolbenstange 41 und das Vorfahren des Kolbens 42 in dem dritten Hydraulikzylinder 17 wird Hydraulikflüssigkeit aus dem bodenseitigen Zylinderraum des dritten Hydraulikzylinders 17 herausgedrückt und gelangt in die an diesem bodenseitigen Zylinderraum angeschlossene Leitung 40'. Diese Leitung 40' ist an den kolbenstangenseitigen Zylinderraum des zweiten Hydraulikzylinders 15 angeschlossen. Hierdurch wird die Kolbenstange 43 des zweiten Hydraulikzylinders 15 ebenfalls in den Zylinder 17 eingezogen. Hierdurch werden die Bodenwalzen 9 gegenüber dem Rahmen 1 des Gerätes und den Bodenbearbeitungswerkzeugen 2 angehoben, so dass die Bodenbearbeitungswerkzeuge 2 abgesenkt werden. Hierdurch lässt sich somit entsprechend, je nachdem wie viel Hydraulikflüssigkeit in die Zylinderräume der Hydraulikzylinder 15 und 17 fließt, die Arbeitstiefe der Bodenbearbeitungswerkzeuge 2 in Richtung größerer Bearbeitungstiefe einstellen. Gleichzeitig verdrängt der Kolben 44 des zweiten Hydraulikzylinders 15 Hydraulikflüssigkeit aus dem bodenseitigen Zylinderraum über die hieran angeschlossene Hydraulikleitung 40", die mit dem ersten kolbenstangenseitigen Zylinderraum 22 des ersten Hydraulikzylinders 14 verbunden ist. Hierdurch wird die Kolbenstange 26 des ersten Hydraulikzylinders 14 eingezogen, so dass die Laufräder 6 des Transportfahrwerkes 7 angehoben werden. Gleichzeitig verdrängt der Kolben 24 des ersten Zylinderraumes 22 des ersten Hydraulikzylinders 14 Hydraulikflüssigkeit aus dem bodenseitigen Zylinderraum, welches über die daran angeschlossene Hydraulikleitung 45 in das Hydrauliksystem des Schleppers zurückgedrückt wird.

Zur Verringerung der Arbeitstiefe wird in die Hydraulikleitung 45, welche über den Anschluss 32 mit dem kolbenseitigen Bereich des ersten Zylinderraums 22 des ersten Hydraulikzylinders 14 verbunden ist, mit Druck beaufschlagt. Hierdurch werden die Kolbenstangen 26 ausgefahren und somit die Bodenwalzen 9 gegenüber dem Rahmen 1 und den Bodenbearbeitungswerkzeugen 2 abgesenkt, so dass der Rahmen 1 und die Bodenbearbeitungswerkzeuge 2 gegenüber den Bodenwalzen 9 und dem Boden angehoben werden. Durch das Ausfahren der Kolbenstange 26 wird über den Kolben 24 Hydraulikflüssigkeit aus dem kolbenstangenseitigen Bereich des ersten Zylinderraumes 22 des ersten Hydraulikzylinders 14 heraus gedrückt und gelangt in die an dem Anschluss 33 angeschlossene Leitung 40". Über diese Leitung 40" wird Hydraulikflüssigkeit in den bodenseitigen Zylinderraum des zweiten Hydraulikzylinders 15 gedrückt. Hierdurch fährt die Kolbenstange 43 des zweiten Hydraulikzylinders 15 ebenfalls aus. Hierdurch werden die Bodenwalzen 9 gegenüber dem Rahmen 1 des Gerätes und den Bodenbearbeitungswerkzeugen 2 abgesenkt, so dass die Bodenbearbeitungswerkzeuge 2 angehoben werden. Hierdurch lässt sich somit entsprechend, je nachdem wie viel Hydraulikflüssigkeit in die Zylinderräume der Hydraulikzylinder 15 fließt, die Arbeitstiefe der Bodenbearbeitungswerkzeuge in Richtung kleinerer Bearbeitungstiefe einstellen. Gleichzeitig verdrängt der Kolben 39 des zweiten Hydraulikzylinders 15 Hydraulikflüssigkeit aus dem kolbenseitigen Zylinderraum über die hieran angeschlossene Hydraulikleitung 40', die mit dem kolbenseitigen Zylinderraum des dritten Hydraulikzylinders 17 verbunden ist. Hierdurch werden die Stützräder 5 ebenfalls abgesenkt und die Bodenbearbeitungswerkzeuge 2 angehoben. Gleichzeitig verdrängt der Kolben 42 des dritten Hydraulikzylinders Hydraulikflüssigkeit aus dem bodenseitigen Zylinderraum, welches über die daran angeschlossene Hydraulikleitung 40 in das Hydrauliksystem des Schleppers zurückgedrückt wird.

Die im vorderen Bereich des Rahmens 1 angeordneten Stützräder 5 sind als Dämpfungselemente und/oder Schwingungsstiller gegen das Aufschaukeln des Bodenbearbeitungsgerätes wirkend ausgebildet, so das eine ruhige Lage des Gerätes während der Bodenbearbeitung gegeben ist.

Die Einstellung der Arbeitstiefe der Bodenbearbeitungswerkzeuge 2 nach Abnahme der Bodenwalze 9, also wenn das Gerät ohne Bodenwalze 9 entsprechend den Fig. 2 und 3 eingesetzt wird, unterscheidet sich von dem Einsatz mit einer Bodenwalze 9 gemäß Fig. 1 in folgender Weise:
Die Einstellung der Arbeitstiefe über die Hydrauliksysteme 34 und 35 ist prinzipiell gleich. Die hintere Tiefenführung der Bodenbearbeitungswerkzeuge 2 wird von den Laufrädern 6 des Fahrwerkes 7 anstelle durch die Bodenwalze 9 übernommen.

Ein Umbau der Hydrauliksysteme 34 und 35 ist nicht erforderlich.

Es muss lediglich zur Einstellung der gewünschten Arbeitstiefe über die Laufräder 6 des Fahrwerkes 7 eine Hubbegrenzung des Hubweges der Kolbenstange 25 durch das Einschwenken der Distanzschreiben 29 erfolgen, damit eine Abstimmung zwischen den Laufrädern 6 des Fahrwerkes 7 und den Stützrädern 5 zur Einstellung der Arbeitstiefe sichergestellt ist.

Falls je nach den vorliegenden Bodenverhältnissen die Stützräder und Laufrädern 6 unterschiedlich tief in den Boden einsinken, kann durch das Einschwenken einer unterschiedlichen Anzahl von Distanzscheiben 29 die Hubbegrenzung entsprechend verändert werden.

Über die Distanzschreiben 29 kann also eine entsprechende Justierung oder Abgleichung der Tiefenführung von Stützrädern 5 und Laufrädern 6 erfolgen.

Das Ausheben des Gerätes in die Transportposition über das Hydraulikkreislaufsystem 34 erfolgt wie vor zur Ausgestaltung des Gerätes gemäß Fig. 1 beschrieben ist.

## Patentansprüche

1. Landwirtschaftliches Bodenbearbeitungsgerät mit einem Rahmen, einem mittels erster doppeltwirkender Hydraulikzylinder höhenverstellbar gegenüber dem Rahmen angeordneten und Laufräder aufweisenden Transportfahrwerk, zumindest einer wahlweise hinter den Bodenbearbeitungswerkzeugen mittels zweiter doppeltwirkender Hydraulikzylinder höhenverstellbar anzuordnender Bodenwalze und im vorderen Bereich des Rahmens angeordneten und gegenüber dem Rahmen mittels dritter doppeltwirkender Hydraulikzylinder höhenverstellbar angeordneten Stützrädern, **dadurch gekennzeichnet, dass** der zumindest eine erste doppeltwirkende Hydraulikzylinder (14) zwei durch eine Trennwand (28) voneinander getrennte Zylinderräume (21, 22) aufweist, dass in dem ersten (22) und zweiten Zylinderraum (21) des ersten Hydraulikzylinders (14) jeweils eine mit einem Kolben (23, 24) verbundene Kolbenstange (25, 26) angeordnet ist, dass jeweils beiden Zylinderräumen (21, 22) des ersten Hydraulikzylinders (14) zwei Hydraulikanschlüsse (30, 31, 32, 33) zugeordnet sind, so dass jede Zylinderstange (25, 26) des ersten Hydraulikzylinders (14) doppeltwirkend ansteuerbar ist, dass zumindest der in dem zweiten Zylinderraum (21) des ersten Hydraulikzylinders (14) angeordneten Zylinderstange (25) Distanzscheiben (29) zur Einstellung des Hubweges dieser Zylinderstange (25) zugeordnet sind, wobei die Hydraulikanschlüsse (32, 33) des ersten Zylinderraumes (22) des ersten Hydraulikzylinders (14) mit Hydraulikanschlüssen der zweiten (15) und dritten Hydraulikzylinder (17) in einem gemeinsamen Hydraulikkreissystem (35) zur Einstellung der Arbeitstiefe der Bodenbearbeitungswerkzeuge (2) verbunden sind, und wobei die Hydraulikanschlüsse (30, 31) des zweiten Zylinderraumes (21) des ersten Hydraulikzylinders (14) mit einem weiteren Hydraulikkreissystem (34) zum Ausheben und Absenken der Laufräder (6) des Transportfahrwerkes (7) gegenüber dem Rahmen (1) verbunden sind.

2. Landwirtschaftliches Bodenbearbeitungsgerät nach Anspruch 1, **dadurch gekennzeichnet, dass** der erste Hydraulikzylinder (14) aus zwei in deren Bodenbereich (27) miteinander verschweißten doppeltwirkenden Hydraulikzylinders (21, 22) besteht.

3. Landwirtschaftliches Bodenbearbeitungsgerät nach Anspruch 1 oder 2, **dadurch gekennzeichnet, dass** die Bodenwalze (9) abnehmbar am Rahmen (1) angeordnet ist, dass nach Abnahme der Bodenwalze (9) vom Rahmen (1) die Arbeitstiefe der Bodenbearbeitungswerkzeuge (2) über die dem Transportfahrwerk (7) zugeordneten ersten Hydraulikzylinder (14) in Verbindung mit den Distanzscheiben (29) einstellbar ist.

4. Landwirtschaftliches Bodenbearbeitungsgerät nach zumindest einem der vorstehenden Ansprüche, **dadurch gekennzeichnet, dass** die im vorderen Bereich des Rahmens (1) angeordneten Stutzräder (5) als Dämpfungselemente und/oder Schwingungstilger gegen das Aufschaukeln des Bodenbearbeitungsgerätes wirkend ausgebildet sind.

## Claims

1. Agricultural soil cultivation device having a frame, having a transport chassis that is arranged so as to be vertically adjustable with respect to the frame by means of first double-acting hydraulic cylinders and has running wheels, having at least one ground roller that is optionally to be arranged behind the soil cultivation tools in a vertically adjustable manner by means of second double-acting hydraulic cylinders, and having supporting wheels that are arranged in the front region of the frame and are arranged so as to be vertically adjustable with respect to the frame by means of third double-acting hydraulic cylinders, **characterized in that** the at least one first double-acting hydraulic cylinder (14) has two cylinder spaces (21, 22) that are separated from one another by a partition wall (28), **in that** a piston rod (25, 26) connected to a piston (23, 24) is arranged in each of the first (22) and second cylinder space (21) of the first hydraulic cylinder (14), **in that** each of the two cylinder spaces (21, 22) of the first hydraulic cylinder (14) is assigned two hydraulic connections (30, 31, 32, 33) such that each cylinder rod (25, 26) of the first hydraulic cylinder (14) is controllable in a double-acting manner, **in that** at least the cylinder rod (25) arranged in the second cylinder space (21) of the first hydraulic cylinder (14) is assigned spacers (29) for setting the stroke of this cylinder rod (25), wherein the hydraulic connections (32, 33) of the first cylinder space (22) of the first hydraulic cylinder (14) are connected to hydraulic connections of the second (15) and third hydraulic cylinder (17) in a common hydraulic circuit system (35) in order to set the working depth of the soil cultivation tools (2), and wherein the hydraulic connections (30, 31) of the second cylinder space (21) of the first hydraulic cylinder (14) are connected to a further hydraulic circuit system (34) in order to raise and lower the running wheels (6) of the transport chassis (7) with respect to the frame (1).

2. Agricultural soil cultivation device according to Claim 1, **characterized in that** the first hydraulic cylinder (14) consists of two double-acting hydraulic cylinders (21, 22) that are welded together in their base region (27).

3. Agricultural soil cultivation device according to Claim 1 or 2, **characterized in that** the ground roller (9) is arranged removably on the frame (1), **in that**, after the ground roller (9) has been removed from the frame (1), the working depth of the soil cultivation tools (2) is settable via the first hydraulic cylinder (14) assigned to the transport chassis (7) in conjunction with the spacers (29).

4. Agricultural soil cultivation device according to at least one of the preceding claims, **characterized in that** the supporting wheels (5) arranged in the front region of the frame (1) are configured to act as damping elements and/or vibration absorbers with respect to the build-up of vibrations in the soil cultivation device.

## Revendications

1. Machine agricole de travail du sol comprenant un cadre, un châssis de transport disposé de manière réglable en hauteur par rapport au cadre au moyen de premiers cylindres hydrauliques à double action et présentant des roues de roulement, au moins un rouleau de sol pouvant être disposé de manière réglable en hauteur au moyen de deuxièmes cylindres hydrauliques à double action de manière sélective derrière les outils de travail du sol et des roues de support disposées dans la région avant du cadre et disposées de manière réglable en hauteur par rapport au cadre au moyen de troisièmes cylindres hydrauliques à double action, **caractérisée en ce que** l'au moins un premier cylindre hydraulique à double action (14) présente deux espaces de cylindres (21, 22) séparés l'un de l'autre par une paroi de séparation (28), **en ce que** dans le premier (22) et le deuxième (21) espace de cylindre du premier cylindre hydraulique (14) est à chaque fois disposée une tige de piston (25, 26) connectée à un piston (23, 24), **en ce qu'**à chaque fois deux raccords hydrauliques (30, 31, 32, 33) sont associés aux deux espaces de cylindre (21, 22) du premier cylindre hydraulique (14) de telle sorte que chaque tige de cylindre (25, 26) du premier cylindre hydraulique (14) puisse être commandée de manière à avoir une double action, **en ce que** des disques d'espacement (29) sont associés à au moins la tige de cylindre (25) disposée dans le deuxième espace de cylindre (21) du premier cylindre hydraulique (14) en vue de l'ajustement de la course de cette tige de cylindre (25), les raccords hydrauliques (32, 33) du premier espace de cylindre (22) du premier cylindre hydraulique (14) étant connectés à des raccords hydrauliques du deuxième (15) et du troisième (17) cylindre hydraulique dans un système de circuit hydraulique commun (35) pour l'ajustement de la profondeur de travail des outils de travail du sol (2), et les raccords hydrauliques (30, 31) du deuxième espace de cylindre (21) du premier cylindre hydraulique (14) étant connectés à un système de circuit hydraulique supplémentaire (34) pour soulever et abaisser les roues de roulement (6) du châssis de transport (7) par rapport au cadre (1).

2. Machine agricole de travail du sol selon la revendication 1, **caractérisée en ce que** le premier cylindre hydraulique (14) se compose de deux cylindres hydrauliques (21, 22) à double action soudés l'un à l'autre dans leur région de fond (27).

3. Machine agricole de travail du sol selon la revendication 1 ou 2, **caractérisée en ce que** le rouleau de sol (9) est disposé de manière amovible sur le cadre (1), et **en ce qu'**après l'enlèvement du rouleau de sol (9) du cadre (1), la profondeur de travail des outils de travail du sol (2) peut être ajustée par le biais du premier cylindre hydraulique (14) associé au châssis de transport (7) en association avec les disques d'espacement (29).

4. Machine agricole de travail du sol selon au moins l'une quelconque des revendications précédentes, **caractérisée en ce que** les roues de support (5) disposées dans la région avant du cadre (1) sont réalisées sous forme d'éléments d'amortissement et/ou d'amortisseurs d'oscillations agissant contre les oscillations de la machine de travail du sol.
